# EUROPÄISCHE PATENTSCHRIFT

(11) **EP 0 399 395 B1**
(45) Veröffentlichungstag und Bekanntmachung des Hinweises auf die Patenterteilung: **09.03.1994**
(21) Anmeldenummer: 90109440.9
(22) Anmeldetag: 18.05.1990
(51) Int. Cl.: C09B 69/02, D06P 1/41

(54) **Tetrachloroferrate von basischen Farbstoffen**
Tetrachloroferrates of basic dyes
Tétrachloroferrates de colorants basiques

(30) Priorität: 26.05.1989 DE 3917257
(43) Veröffentlichungstag der Anmeldung: 28.11.1990
(73) Patentinhaber: BASF Aktiengesellschaft, 67063 Ludwigshafen (DE)
(72) Erfinder: Dix, Johannes Peter, Dr., D-6719 Weisenheim (DE); Hansen, Guenter, Dr., D-6700 Ludwigshafen (DE); Kast, Hellmut, Dr., D-6712 Bobenheim-Roxheim (DE)

(56) Entgegenhaltungen:
- EP-A- 0 207 317
- CH-A- 508 024
- DE-A- 3 111 200

## Beschreibung

Die vorliegende Erfindung betrifft neue basische Farbstoffe der Formel I

Chr^{⊕} [FeCl₄)^{⊖} (I),

in der Chr^{⊕} ein Farbstoffkation bedeutet.

Bei der Synthese von basischen Farbstoffen besteht im allgemeinen eine wichtige Reinigungsoperation nach dem Syntheseschritt darin, die Farbstoffe in Form eines schwerlöslichen Salzes aus dem Reaktionsmedium auszufällen. Zu diesem Zwecke werden die kationischen Farbstoffe häufig in die Trichlorozinkat- oder Tetrachlorozinkatsalze übergeführt.

Da dabei eine Kontaminierung des Abwassers mit Zinkionen nicht auszuschließen ist, bestand die Aufgabe der vorliegenden Erfindung darin, neue schwerlösliche Salze von basischen Farbstoffen bereitzustellen, die in einfacher und kostengünstiger weise herzustellen, arbeitsplatzhygienisch unbedenklich und unproblematisch in Bezug auf ihr Abwasser sind.

Demgemäß wurden die eingangs beschriebenen basischen Farbstoffe der Formel I gefunden.

Farbstoffkationen im erfindungsgemäßen Sinn leiten sich z.B. von den im Colour Index unter dem Stichwort "Basic Dyes" aufgeführten Verbindungen, von den in K. Venkataraman "The Chemistry of Synthetic Dyes", Vol. 4, Kap. 3 bis 5, Academic Press, New York, 1971, beschriebenen Farbstoffen sowie von den zahlreich in der Patentliteratur beschriebenen Farbstoffen, die eine kationische Gruppe aufweisen, ab.

Farbstoffkationen Chr^{⊕} leiten sich z.B. überwiegend von einem Farbstoff aus der Klasse, umfassend die Mono- und Polyazofarbstoffe, Anthrachinonfarbstoffe, Diphenylmethanfarbstoffe, Triphenylmethanfarbstoffe, Xanthenfarbstoffe, Pyryliumfarbstoffe, Acridinfarbstoffe, Azinfarbstoffe, Oxazinfarbstoffe, Thiazinfarbstoffe, Cyaninfarbstoffe und Napthostrylfarbstoffe ab.

Als Farbstoffindividuen, von denen sich das Farbstoffkation ableitet, seien beispielhaft die Farbstoffe C.I. Basic Yellow 11, C.I. Basic Yellow 12, C.I. Basic Yellow 49, C.I. Basic Yellow 51, C.I. Basic Orange 33, C.I. Basic Orange 41, C.I. Basic Orange 54, C.I. Basic Red 23, C.I. Basic Red 29, C.I. Basic Red 39, C.I. Basic Red 46, C.I. Basic Red 51, C.I. Basic Violet 25, C.I. Basic Violet 32, C.I. Basic Violet 35, C.I. Basic Violet 48, C.I. Basic Blue 3, C.I. Basic Blue 40, C.I. Basic Birne 41, C.I. Basic Blue 53, C.I. Basic Blue 54, C.I. Basic Blue 70, C.I. Basic Green 8 oder C.I. Basic Brown 12 genannt. (Hierbei handelt es sich um die üblichen Bezeichnungen, wie sie im Colour Index gebraucht werden.)

Hervorzuheben sind Farbstoffe der Formel I, in der Chr^{⊕} sich von einem Farbstoff aus der Klasse, umfassend Dibenzoxazine, Methincyanine, Azamethincyanine, Diazamethincyanine, Styryle und Diazastyryle, ableitet.

Solche Farbstoffe gehorchen in der Regel der Formel II bis VII 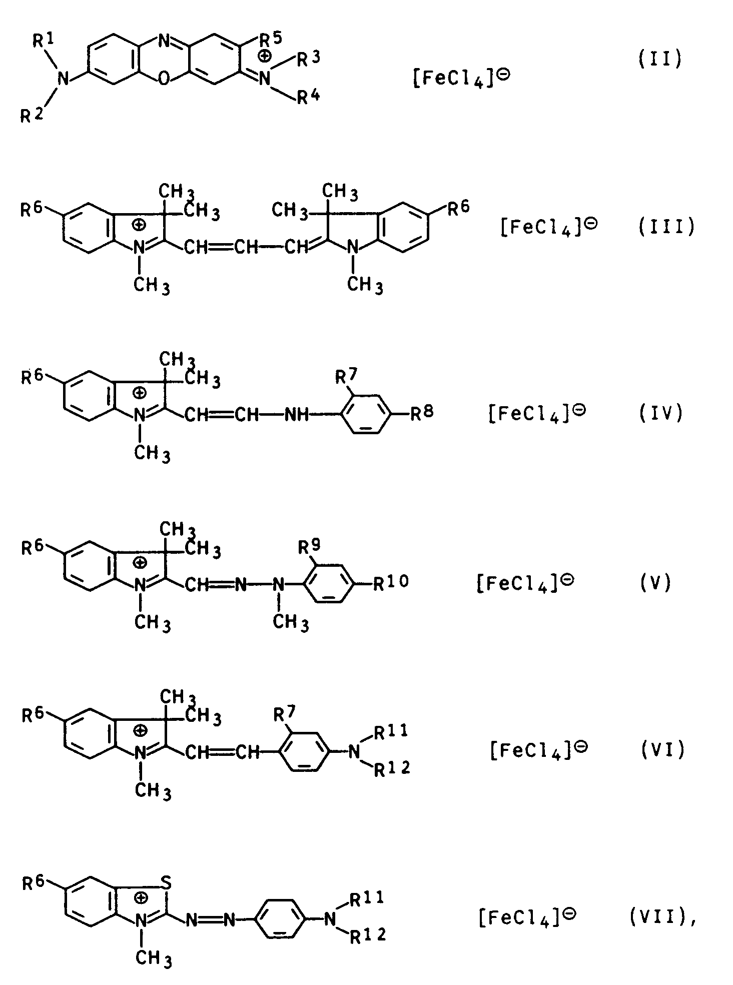
wobei die Reste
- R¹, R², R³ und R⁴: gleich oder verschieden sind unabhängig voneinander jeweils Wasserstoff, C₁-C₄-Alkyl, Benzyl oder 2-Cyanoethyl,
- R⁵: Wasserstoff oder Methyl,
- R⁶: Wasserstoff, C₁-C₄-Alkyl, C₁-C₄-Alkoxy oder Chlor,
- R⁷ und R⁸: gleich oder verschieden sind und unabhängig voneinander jeweils Wasserstoff, C₁-C₄-Alkyl oder C₁-C₄-Alkoxy,
- R⁹ und R¹⁰: gleich oder verschieden sind und unabhängig voneinander jeweils Wasserstoff, C₁-C₄-Alkyl, C₁-C₄-Alkoxy oder Halogen und
- R¹¹ und R¹²: gleich oder verschieden sind und unabhängig voneinander jeweils C₁-C₄-Alkyl, 2-Cyanoethyl, 2-(C₁-C₄-Alkoxy)ethyl oder Chlorethyl bedeuten.

Die Synthese des Chromophorkations Chr^{⊕} oder der sich davon ableitenden neutralen Farbbasen ist allgemein bekannt. (Siehe die eingangs erwähnten Literaturzitate). Bei vielen der dort beschriebenen Farbsalze handelt es sich zudem um handelsübliche Farbstoffe.

Die Herstellung der basischen Farbstoffe der Formel I erfolgt im allgemeinen nach der Synthese des Farbstoffkations Chr^{⊕}, wobei als Gegenionen z.B. die Anionen Halogenid, wie Fluorid, Chlorid, Bromid oder Iodid, Hydrogensulfat, Sulfat, Aminosulfat, Hydrogenphosphat, Phosphat, Borat, Tetrafluoroborat, Methosulfat, Ethosulfat, Methansulfonat, Benzolsulfonat, o- oder p-Toluolsulfonat, Formiat, Acetat, Propionat, Hydroxyacetat, Methoxyacetat, Lactat, Oxalat, Maleinat, Succinat, Tartrat, Malat, Benzoat, Citrat, Adipat oder die Anionen von Diglykolsäure oder von Additionsprodukten von Polyalkoholen aus ortho-Borsäure zugegen sind. In der Regel gibt man dabei Eisen(III)chlorid zum Reaktionsgemisch. Die Zugabe kann dabei in Form einer wäßrigen Lösung oder vorzugsweise in Substanz erfolgen. Wenn man Eisen(III)chlorid in Substanz zugibt, kann man sowohl reines Eisen(III)chlorid (FeCl₃) oder auch Eisen(III)chlorid in Form seiner Hydrate (FeCl₃·2,5 H₂O oder FeCl₃·6 H₂O) verwenden. Die Menge an Eisen(III)chlorid richtet sich nach der Menge des Farbstoffkations. Je Moläquivalent Farbstoffkation werden im allgemeinen 1 bis 1,5, vorzugsweise 1,1 bis 1,3 Moläquivalent an Eisen(III)chlorid zugegeben. Dabei fallen die basischen Farbstoffe der Formel I aus dem Reaktionsgemisch aus. In manchen Fällen kann es von Vorteil sein, zur Vervollständigung der Fällung zusätzlich Natriumchlorid oder Kaliumchlorid zuzusetzen.

Die so abgeschiedenen Farbstoffe werden nach an sich bekannten Methoden abgetrennt, gewaschen und getrocknet.

Die neuen Farbstoffe der Formel I eignen sich in vorteilhafter Weise zum Färben von Acrylnitrilpolymerisaten oder von sauer modifizierten Polyestern, insbesondere von sauer modifizierten Polyethylenglvkolterephthalaten.

Man erhält dabei Färbungen in klaren, reinen Tönen. Dies ist überraschend, denn aufgrund der Eigenfarbe des Tetrachloroferratanions war davon auszugehen, daß jeweils eine Abtrübung des Farbtons auftritt.

Die neuen Tetrachloroferrate I können auch in vorteilhafter Weise mittels des in der älteren Patentanmeldung DE-A-3 833 195 beschriebenen Verfahrens in die entsprechenden Monocarbonsäuresalze, insbesondere in die Formiate, übergeführt werden.

Die folgenden Beispiele sollen die Erfindung näher erläutern.

### Beispiel 1

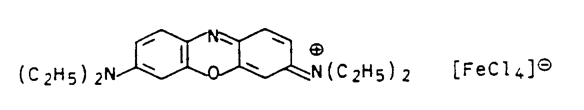

209 g N,N-Diethyl-m-anigidin wurden in 305 ml 30 gew.%ige Salzsäure gegeben und auf 10°C abgekühlt. Bei dieser Temperatur wurden 226 ml 30 gew.%ige wäßrige Natriumnitritlösung zugetropft und anschließend 1 Stunde nachgerührt. Dann wurde mit 20 gew.%iger wäßriger Sodalösung ein pH-Wert von 2,2 eingestellt. Die resultierende Suspension wurde innerhalb von 2,5 Stunden bei einer Temperatur von 70 bis 78°C in ein Gemisch aus 660 ml Isopropanol und 175 g 3-Diethylaminophenol zulaufen gelassen. Nach 1 Stunde Nachrühren bei 80°C und 12 Stunden bei Raumtemperatur wurde die Temperatur auf 60°C angehoben, und es erfolgte die Zugabe von 235 g Eisen(III)chlorid. Danach wurde das Reaktionsgemisch 30 Minuten bei 80°C nachgerührt, auf 30°C abgekühlt und der resultierende Niederschlag abgesaugt und zweimal mit jeweils 250 ml Methanol und dann anschließend mit 520 ml einer 10 gew.%igen Kochsalzlösung gewaschen. Die Trocknung erfolgte bei 70°C unter vermindertem Druck. Ausbeute: 520 g.

| Elementaranalyse: | | | | |
|---|---|---|---|---|
| | C | Cl | Fe | N |
| berechnet | 45,99 % | 27,21 % | 10,69 % | 8,05 % |
| gefunden | 45,8 % | 26,5 % | 10,6 % | 8,1 % |

Absorptionsmaximum: 658 nm

### Beispiel 2

35,5 g des Farbstoffs der Formel 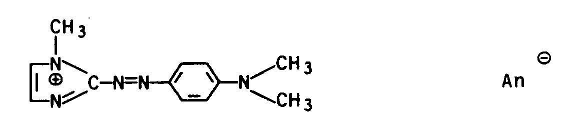
(mit An^{⊖} = CH₃SO₄^{⊖}) wurden in 400 ml Wasser bei 60°C gelöst. Nach Zugabe von 100 ml einer Lösung von 24,3 g Eisen(III)chlorid in 50 ml Wasser wurde über Nacht bei Raumtemperatur nachgerührt, dann abgesaugt und der Rückstand bei 60°C unter vermindertem Druck getrocknet. Man erhielt 42 g des obengenannten Farbstoffs (mit An^{⊖} = FeCl₄^{⊖}).

| Elementaranalyse: | | | | |
|---|---|---|---|---|
| | C | Cl | Fe | N |
| berechnet | 35,31 % | 32,14 % | 12,64 % | 15,84 % |
| gefunden | 33,7 % | 33,0 % | 13,6 % | 15,0 % |

Absorptionsmaximum: 526 nm

### Beispiel 3

23,1 g des Farbstoffs der Formel 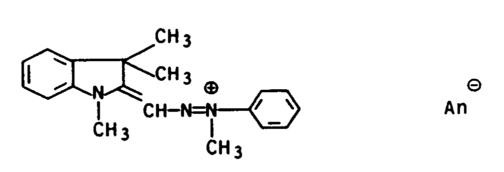
(mit An^{⊖} = Cl^{⊖}), gelöst in 100 ml Wasser, wurden bei 70°C mit einer Lösung von 24,3 g Eisen(III)chlorid in 30 ml Wasser in ca. 30 Minuten versetzt. Nach 20 Minuten Nachrühren bei 70 bis 75°C wurde auf 30°C gekühlt, abgesaugt und zweimal mit 50 ml Eiswasser gewaschen. Nach Trocknung bei 80°C unter vermindertem Druck erhielt man 36 g des obengenannten Farbstoffs (mit An^{⊖} = FeCl₄^{⊖}).

| Elementaranalyse: | | | | |
|---|---|---|---|---|
| | C | Cl | Fe | N |
| berechnet | 46,55 % | 28,99 % | 11,39 % | 8,57 % |
| gefunden | 47,1 % | 27,9 % | 11,0 % | 8,7 % |

Absorptionsmaximum: 428 nm
In analoger Weise werden die Tetrachloroferrate der in der folgenden Tabelle aufgeführten Farbstoffe erhalten.

| Beispiel-Nr. | Farbstoff | Absorptionsmaximum |
|---|---|---|
| 4 | C.I. Basic Yellow 12 | 412 nm |
| 5 | C.I. Basic Yellow 11 | 412 nm |
| 6 | C.I. Basis Yellow 49 | 435 nm |
| 7 | C.I. Basis Orange 33 | 475 nm |
| 8 | C.I. Basis Orange 41 | 452 nm |
| 9 | C.I. Basis Orange 54 | 498 nm |
| 10 | C.I. Basis Red 46 | 528 nm |
| 11 | C.I. Basis Red 29 | 511 nm |
| 12 | C.I. Basis Red 39 | 521 nm |
| 13 | C.I. Basis Red 23 | 527 nm |
| 14 | C.I. Basis Violet 32 | 571 nm |
| 15 | C.I. Basis Violet 35 | 551 nm |
| 16 | C.I. Basis Violet 48 | 525 nm |
| 17 | C.I. Basis Violet 25 | 531 nm |
| 18 | C.I. Basis Blue 70 | 593 nm |
| 19 | C.I. Basis Blue 53 | 584 nm |
| 20 | C.I. Basis Blue 40 | 603 nm |
| 21 | C.I. Basis Blue 54 | 602 nm |
| 22 | C.I. Basis Blue 41 | 609 nm |
| 23 | C.I. Basis Green 8 | 397 nm, 653 nm |
| 24 | C.I. Basis Brown 12 | 444 nm |

## Patentansprüche

1. Basische Farbstoffe der Formel I
Chr^{⊕} [FeCl₄]^{⊖} (I),
in der Chr^{⊕} ein Farbstoffkation bedeutet.

2. Basische Farbstoffe gemäß Anspruch 1, dadurch gekennzeichnet, daß sich das Farbstoffkation Chr^{⊕} von einem Farbstoff aus der Klasse, umfassend die Mono- und Polyazofarbstoffe, Anthrachinonfarbstoffe, Diphenylmethanfarbstoffe, Triphenylmethanfarbstoffe, Xanthenfarbstoffe, Pyryliumfarbstoffe, Acridinfarbstoffe, Azinfarbstoffe, Oxazinfarbstoffe, Thiazinfarbstoffe, Cyaninfarbstoffe und Naphthostyrylfarbstoffe, ableitet.

3. Verwendung der basischen Farbstoffe der Formel I gemäß Anspruch 1 zum Färben von Acrylnitrilpolymerisaten oder sauer modifizierten Polyestern.

## Claims

1. A basic dye of the formula I
Chr^{⊕} [FeCl₄]^{⊖} (I),
where Chr^{⊕} is a dye cation.

2. A basic dye as claimed in claim 1, wherein the dye cation Chr^{⊕} is derived from a dye selected from the class consisting of the monoazo and polyazo dyes, anthraquinone dyes, diphenylmethane dyes, triphenylmethane dyes, xanthene dyes, pyrylium dyes, acridine dyes, azine dyes, oxazine dyes, thiazine dyes, cyanine dyes and naphthostyryl dyes.

3. The use of a basic dye of the formula I as claimed in claim 1 for dyeing acrylonitrile polymers or acid-modified polyesters.

## Revendications

1. Colorants basiques de formule I
Chr^{⊕} [FeCl₄]^{⊖} (I),
dans laquelle Chr^{⊕} signifie un cation colorant.

2. Colorants basiques selon la revendication 1, caractérises en ce que le cation colorant Chr^{⊕} dérive d'un colorant de la classe comprenant les colorants mono- et polyazoïques, les colorants d'anthraquinone, les colorants de diphénylméthane, les colorants de triphénylméthane, les colorants de xanthène, les colorants de pyrylium, les colorants d'acridine, les colorants aziniques, les colorants oxaziniques, les colorants thiaziniques, les colorants de cyanine et les colorants de naphtostyryle.

3. Utilisation des colorants basiques de formule I selon la revendication 1 pour la coloration de polymères d'acrylonitrile ou de polyesters modifiés par des acides.
